# EUROPEAN PATENT APPLICATION

(11) **EP 2 034 200 A1**
(43) Date of publication of application: **11.03.2009**
(21) Application number: 07767542.9
(22) Date of filing: 26.06.2007
(51) Int. Cl.: F16C 27/06, F16C 27/02, F16F 15/02, F16F 15/03, F16F 15/04

(54) **SUPPORT STRUCTURE FOR ROTATING BODY**

(30) Priority: 29.06.2006 JP 2006179018
(71) Applicant: Mitsubishi Heavy Industries, Ltd., Minato-ku Tokyo 108-8215 (JP)
(72) Inventor: YAMASHITA, Katsuya, Hiroshima-shi Hiroshima 733-8553 (JP); YASUDA, Chiaki, Takasago-shi, Hyogo 676-8686 (JP); TAMURA, Kazuhiro, Takasago-shi, Hyogo 676-8686 (JP); KAGUCHI, Hitoshi, Kobe-shi, Hyogo 652-8585 (JP); KASUBATA, Yoshitake, Kobe-shi, Hyogo 652-8585 (JP); KAMBE, Akio, Ritto-shi, Shiga 520-3080 (JP)
(74) Representative: Henkel, Feiler & Hänzel
(86) International application number: PCT/JP2007/062736
(87) International publication number: WO 2008/001736

(57) **Abstract**

The present invention provides a rotating-body support structure that is capable of obtaining a damping effect of a rotating body with a simple configuration. To this end, the rotating-body support structure is configured to include a housing (21) and a bush portion (24) which is supported by the housing (21) and which rotatably supports a boring bar (11); and to have oil filled between the housing (21) and the bush portion (24).

## Description

### TECHNICAL FIELD

The present invention relates to a rotating-body support structure.

### BACKGROUND ART

A common and frequently-employed method of drilling a hole in a work (object to be processed) is as follows. A tool, such as a drill, is attached to a tool-holding member, such as a chuck, and, then, the tool is rotated to make a hole. A recent trend of making various products compact has required compact component parts for these products. Making a compact component part often requires the drilling of a small-diameter and deep hole in the component part. In addition, the drilling has to be precise.

Drilling a hole with a large ratio of hole depth to hole diameter is specifically referred to as deep-hole drilling. Conventionally known techniques of drilling a deep hole include gun drill systems as well as BTA (Boring and Trepanning Association) systems. A tool used for the deep-hole drilling is formed to have a small diameter and long size corresponding to the desired shape of the hole to be drilled in the work. The tip of the tool thus formed long, however, sometimes wobbles radially, and the wobbling makes it impossible to drill a precise deep hole.

To address this problem, rotating-body support structures have been provided so far which are capable of improving the damping effect on the vibration produced in a rotating body, such as a tool. An example of such conventional-type rotating-body support structure is disclosed in Patent Document 1.

Patent Document 1: JP-A-H5-272533

### DISCLOSURE OF THE INVENTION

### PROBLEMS TO BE SOLVED BY THE INVENTION

In the conventional-type structure, a sleeve that is fitted onto the rotating body is formed of a hard brittle material, such as a ceramics and a cemented carbide. A bearing-side slide member that is opposed to the sleeve is formed, by such a method as shrink fitting, integrally with a metal shell disposed at the outer side of the slide member. In addition, the metal shell is press-fitted into a rubber cushioning member. A chamber is formed between the cushioning member and a bearing case, and is filled with a viscoelastic material, specifically a gel silicone. In the conventional-type structure, various types of bonding are used between its members, and a variety of materials are used for the members. Besides, the structure has a large number of component parts. Accordingly, the structure has been complicated.

The present invention made to solve the above-described problems provides a rotating-body support structure that is capable of obtaining a damping effect on the rotating body with a simple configuration.

### MEANS FOR SOLVING THE PROBLEMS

A rotating-body support structure according to a first invention to solve the above-described problem is characterized by comprising:
a housing; and
a plain bearing which is supported by the housing and which supports rotatably a rotating body, and
**characterized in that** oil is filled between the housing and the plain bearing.

A rotating-body support structure according to a second invention to solve the above-described problem is the rotating-body support structure of the first invention characterized by comprising:
a protruding portion that protrudes from an inner circumferential surface of the housing towards an outer circumferential surface of the plain bearing; and
an oil supply passage that supplies oil between an end face of the protruding portion and the outer circumferential surface of the plain bearing.

A rotating-body support structure according to a third invention to solve the above-described problem is the rotating-body support structure of the second invention characterized in that
a recessed portion is formed in at least one of the end face of the protruding portion and the outer circumferential surface of the plain bearing, and
the oil supply passage is communicatively connected to the recessed portion.

A rotating-body support structure according to a fourth invention to solve the above-described problem is characterized by comprising:
a plain bearing that rotatably supports a rotating body; and
dynamic deformation means which is provided on an outer circumferential surface of the plain bearing and which dynamically deforms in an orthogonal direction to the axial direction of the rotating body when the rotating body vibrates.

A rotating-body support structure according to a fifth invention to solve the above-described problem is characterized by comprising:
a plain bearing that rotatably supports a rotating body ;
shrink means that shrinks the plain bearing in the radial direction of the plain bearing; and
control means that controls the shrink means when the rotating body vibrates.

### EFFECTS OF THE INVENTION

In the rotating-body support structure according to the present invention, an object with a vibration-absorbing function to reduce the vibration of the rotating body is disposed around the plain bearing. Accordingly, damping effects on the rotating body can be obtained with a simple configuration.

### BRIEF DESCRIPTIONS OF THE DRAWINGS

[Fig. 1] Fig. 1 is a schematic diagram of a deep-hole drilling apparatus provided with a rotating-body support structure according to the present invention.
[Fig. 2] Fig. 2 is a schematic diagram of a pressure head.
[Fig. 3] Fig. 3 is a schematic diagram showing a rotating-body support structure according to a first embodiment of the present invention.
[Fig. 4] Fig. 4 is a schematic diagram showing a rotating-body support structure according to a second embodiment of the present invention.
[Fig. 5] Fig. 5 is a schematic diagram showing a rotating-body support structure according to a third embodiment of the present invention.
[Fig. 6] Fig. 6 is a schematic diagram showing a rotating-body support structure according to a fourth embodiment of the present invention.

### DESCRIPTIONS OF SYMBOLS

1: 5-axis BTA machine; 11: Boring bar; 12: Tool; 13: Support member; 14: Pressure head; 15: Servo motor; 16: Ball screw mechanism; 21: Housing; 22: Support member; 23: Extending portion; 24: Bush portion; 25: Protruding portion; 26: Oil supply unit; 27: Recessed portion; 31: Support portion; 32: O-ring; 33 and 42: Bush; 41: Piezoelectric element; 43: Control unit; 51: Gap sensor; 52: Control unit; 53: Power amplifier; 54: Electromagnet; W: Work; Wa: Deep hole.

### BEST MODES FOR CARRYING OUT THE INVENTION

Detail descriptions of a rotating-body support structure according to the present invention will be described below with reference to the drawings. Note that, in following embodiments, members with similar structures and functions will be given identical reference numerals, and the descriptions for such members will be given at their respective first time of appearance only. The arrows in the drawings represent the flow of oil.

### Embodiment 1

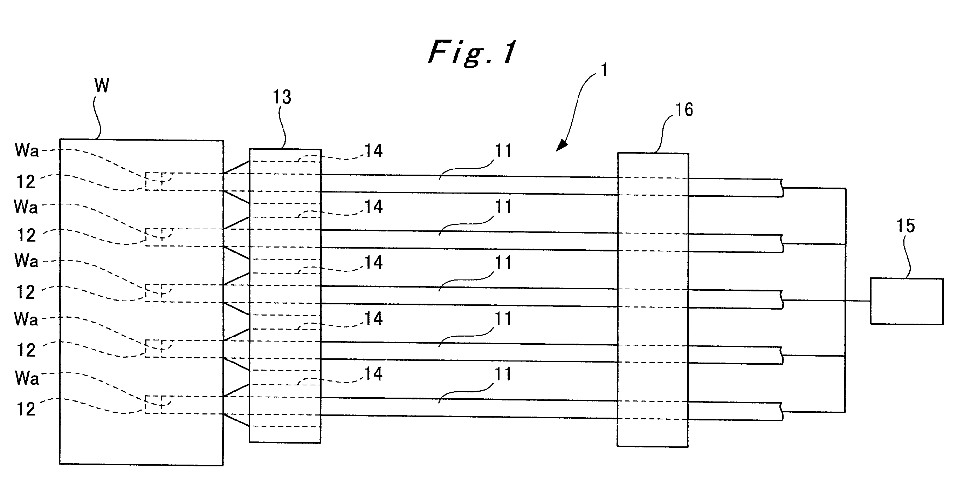

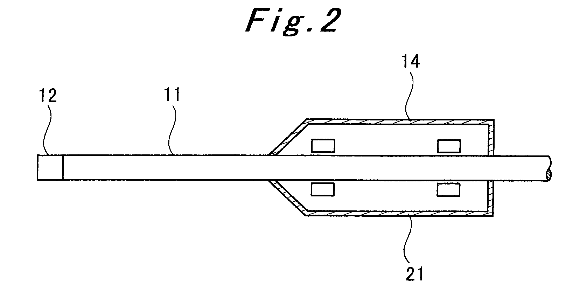

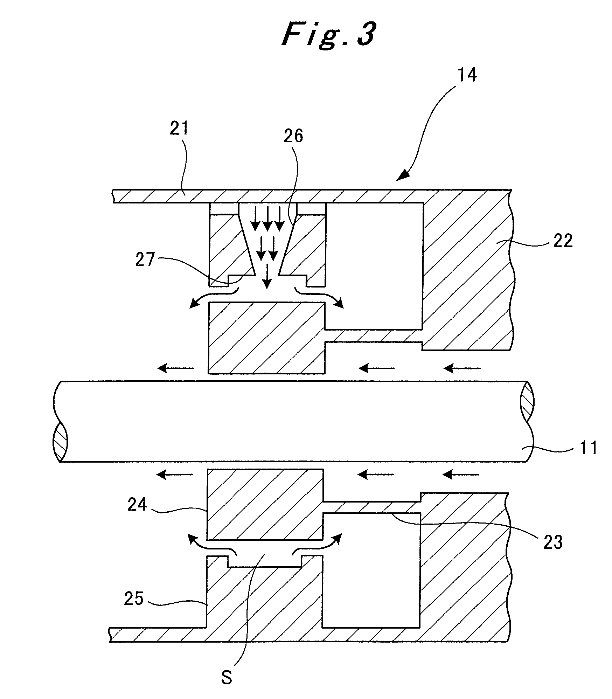

Fig. 1 is a schematic diagram of a deep-hole drilling apparatus provided with a rotating-body support structure according to the present invention. Fig. 2 is a schematic diagram of a pressure head. Fig. 3 is a schematic diagram showing a rotating-body support structure according to a first embodiment of the present invention.

Fig. 1 shows a 5-axis BTA (Boring and Trepanning Association) machine 1, which is a deep-hole drilling apparatus to drill a deep hole in a work (object to be processed) W. The 5-axis BTAmachine 1 includes five boring bars (rotating bodies) 11, each of which has a hollow structure. Each boring bar 11 is provided with a tool 12 at the tip end thereof.

The 5-axis BTA drilling machine 1 is provided with a support member 13. Pressure heads 14 penetrate and are supported by the support member 13. As Fig. 2 shows, inside each of the pressure heads 14, rotating-body support structures of the present invention are disposed both on the front-end side and on the base-end side. Note that the rotating-body support structure will be described later. The boring bars 11 thus penetrating the pressure head 14 are supported rotatably by the support structure and movably in the axial direction.

In addition, the 5-axis BTA machine 1 includes a servo motor 15, which drives to rotate the boring bars 11, and a ball screw mechanism 16, which moves the boring bars 11 in the axial direction. An unillustrated NC apparatus is connected both to the servo motor 15 and to the ball screw mechanism 16.

Subsequently, each rotating-body support structure of the present invention disposed in each of the pressure heads 14 will be described with reference to Fig. 3. Note that the rotating-body support structure is used both on the front-end side of the pressure head 14 and on the base-end side thereof, but the structure may be disposed at least on the front-end side alone.

As Fig. 3 shows, the pressure head 14 is provided with a housing 21 that forms the outer shell of the pressure head 14. Inside the housing 21, the boring bar 11 is disposed coaxially with the housing 21. A ring-shaped support portion 22 is formed so as to protrude inwards from the inner circumferential surface of the housing 21. A tubular extending portion 23 extends in the axial direction of the boring bar 11 (in the axial direction of the housing 21) with one of its ends connected to the front-end of the sidewall of the support portion 22. The other end of the extending portion 23 is formed into a bush portion (plain bearing) 24 that supports the boring bar 11 rotatably.

In addition, a ring-shaped protruding portion 25 is formed so as to protrude inwards from the inner circumferential surface of the housing 21. The protruding portion 25 thus formed is opposed to the bush portion 24. In the protruding portion 25, an oil supply passage 26 is formed at a predetermined position in the direction of the circumference, and extends in the radial direction of the protruding portion 25. Through the oil supply passage 26, the oil is supplied from the base-end side (the housing side) of the protruding portion 25 to the front-end side (center side) thereof. At the front-end portion of the protruding portion 25, a recessed portion 27 is formed so as to sink towards the base-end side. The oil supply passage 26 is communicatively connected to the recessed portion 27. Accordingly, between the outer circumferential surface of the bush portion 24 and the end face of the protruding portion 25, a gap space S is formed by the recessed portion 27.

Note that the housing 21, the support portion 22, the extending portion 23, the bush portion 24, and the protruding portion 25 are static members and are formed integrally with one another. These members are made, for example, of the same metal material, such as brass. The housing 21 is filled with oil, which is supplied from an unillustrated oil supply apparatus. As indicated by the arrows in Fig. 3, the oil is supplied from the base-end side of the boring bar 11 and is supplied through the oil supply passage 26. In addition, in this embodiment, the recessed portion 27 is formed in the end face of the protruding portion 25, but a recessed portion may be formed also in the outer circumferential surface of the bush portion 24, which faces the end face of the protruding portion 25. It is sufficient that at least one of these two faces has a recessed portion formed therein.

Drilling deep holes in the work W starts with the placing of the 5-axis BTA machine 1 at a position where the tip ends of the pressure heads 14 can be pressed onto their respective predetermined positions on the work W. Then, the servo motor 15 and the ball screw mechanism 16 are driven. A predetermined revolution and a predetermined feed speed are given to the tools 12 by means of their respective boring bars 11. Thus formed in the work W are deep holes Wa each of which has a desired hole depth and a desired hole diameter. While the deep holes Wa are being drilled, cutting oil is supplied from an unillustrated cutting-oil supply apparatus to the tip ends of the tools 12. The cutting oil and the chips that have been grazed away by the tools 12 pass through the hollow portions of the boring bars 11, and are discharged out of the inside of the tools 12.

Inside the pressure head 14, oil is supplied by the oil supply apparatus, and flows into the space between the boring bar 11 and the bush portion 24. Accordingly, the friction between the boring bar 11 and the bush portion 24 is reduced, so that the boring bar 11 rotates smoothly. The oil supplied through the oil supply passage 26 flows into the recessed portion 27 to form an oil film in the gap space S.

As the drilling of the deep holes Wa progresses and the feed amount becomes larger, the boring bar 11 protrudes from the pressure head 14 by a larger amount. Accordingly, the whirling vibration of the boring bar 11 becomes larger. Concurrently, inside the pressure head 14, the bush portion 24 vibrates along with the vibration of the boring bar 11. Thus produced is a relative vibration in the perpendicular direction to the outer circumferential surface of the bush portion 24 and to the end face of the protruding portion 25 that is opposed to the bush portion 24. As a consequence, the pressure acting on the oil film formed in the gap space S rises and becomes higher than the pressure acting on the surrounding area. The squeeze action of the oil film in the gap portion S makes it possible to dampen the vibration of the boring bar 11.

### Embodiment 2

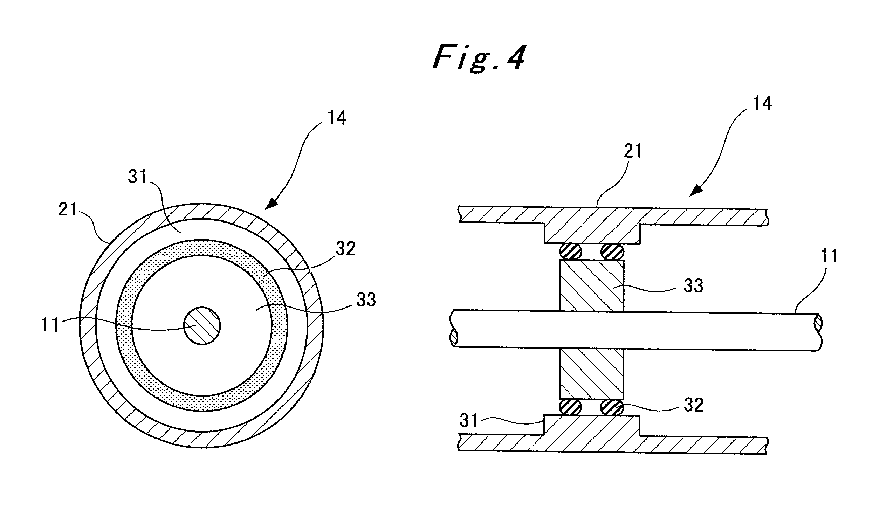

Fig. 4 is a schematic diagram showing a rotating-body support structure according to a second embodiment of the present invention.

As Fig. 4 shows, a ring-shaped support portion 31 is formed so as to protrude inwards from the inner circumferential surface of the housing 21. A bush 33 made of a metal, such as brass, is supported by the support portion 31 with plural (specifically, two in Fig. 4) rubber O-rings (dynamic deformation means) being set in between. The bush 33 serves as a plain bearing to support the boring bar 11 rotatably.

Accordingly, even when the boring bar 11 vibrates during the drilling of the deep hole, the vibration can be damped by the dynamic (elastic) deformation of the O-rings 32.

Incidentally, the O-rings 32 used in this embodiment are made of rubber, but O-rings made of Teflon (registered trademark) may be used alternatively. The use of the Teflon O-rings results in better durability than the rubber O-rings 32. Filling oil between the O-rings, irrespective of whether the O-rings are made of rubber or Teflon, causes a squeeze action of the oil. The squeeze action, in addition to the dynamic deformation of the O-rings, takes further effects in damping the vibration. In addition, the O-rings 32 may be replaced with a vibration-absorbing rubber, a Teflon sheet, a wire mesh, or the like. With the dynamic deformation thereof, the vibration of the boring bar 11 can be damped.

### Embodiment 3

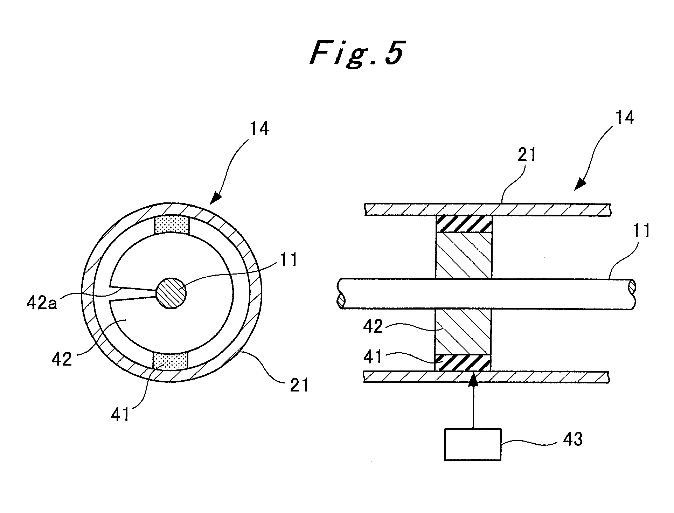

Fig. 5 is a schematic diagram showing a rotating-body support structure according to a third embodiment of the present invention.

As Fig. 5 shows, a pair of upper and lower piezoelectric elements 41 are disposed on the inner circumferential surface of the housing 21. The piezoelectric elements 41 support a Teflon bush 42. A control apparatus (control apparatus) 43 is connected to the piezoelectric elements 41. The bush 42 serves as a plain bearing, and supports the boring bar 11 rotatably. In addition, a slit (shrink means) 42a is formed in the bush 42 in a radial direction of the bush 42 all along the thickness (length) direction of the bush 42.

The clearance of the slit 42a is adjusted by controlling the voltage applied to the piezoelectric elements 41 in accordance with the feed amount of the boring bar 11. To be more specific, as the feed amount of the boring bar 11 increases, the gap space of the slit 42a is gradually narrowed down so as to make the bush 42 shrink in its radial direction. With such a control the clearance between the boring bar 11 and the bush 42 is decreased. As a consequence, during the drilling of the deep hole, even when the protruding amount of the boring bar 11 from the pressure head 14 increases and the bearing load acting on the bush 42 changes, the boring bar 11 can be positioned in the center of the bush 42. Accordingly, the clearance between the boring bar 11 and the bush 42 can always be kept in an optimal state. As a consequence, the vibration of the boring bar 11 can be damped.

### Embodiment 4

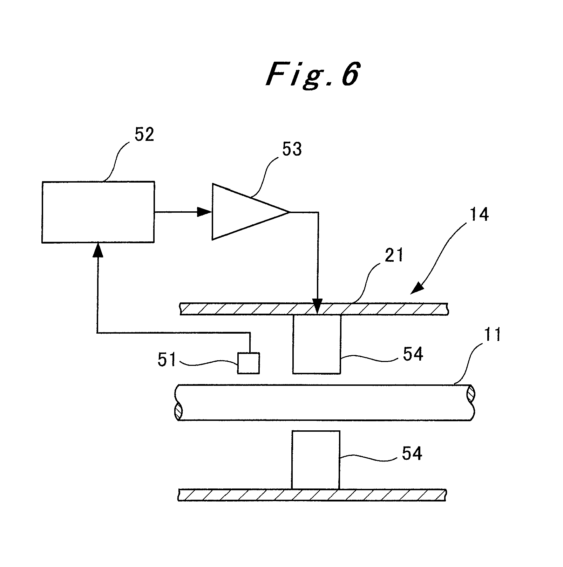

Fig. 6 is a schematic diagram showing a rotating-body support structure according to a fourth embodiment of the present invention.

As Fig. 6 shows, in the housing 21, a gap sensor 51 is disposed so as to face the boring bar 11. The gap sensor 51 is connected to a control apparatus 52, and the control apparatus is connected to a power amplifier 53. In addition, four electromagnets 54 are disposed around the boring bar 11, at each of the upper, the lower, the right-hand, and the left-hand sides of the boring bar 11. These electromagnets 54 are connected to the power amplifier 53.

The gap amount between each electromagnet 54 and the boring bar 11 is detected by the gap sensor 51. The current flowing through each electromagnet 54 is controlled in accordance with the gap amount thus detected. Accordingly, the boring bar 11 can be attracted from above, from below, from the right-hand side, and from the left-hand side by the magnetic attractive force of the respective electromagnets 54. In this way, the boring bar 11 is positioned in the center of the electromagnets 54. As a consequence, the vibration of the boring bar 11 can be damped.

The controlling of the current flowing through the electromagnets is based on the gap amount in the above-described example, but the controlling of the current flowing through the electromagnets may be based on the speed converted from the detected vibration.

### Field of the Industrial Application

The present invention is applicable to bearings with an improved vibration-absorbing function.

## Claims

1. A rotating-body support structure **characterized by** comprising:
a housing; and
a plain bearing which is supported by the housing and which rotatably supports a rotating body, and
**characterized in that** oil is filled between the housing and the plain bearing.

2. The rotating-body support structure according to claim 1 **characterized by** comprising:
a protruding portion that protrudes from an inner circumferential surface of the housing towards an outer circumferential surface of the plain bearing; and
an oil supply passage that supplies oil between an end face of the protruding portion and the outer circumferential surface of the plain bearing.

3. The rotating-body support structure according to claim 2
**characterized in that**
a recessed portion is formed in at least one of the end face of the protruding portion and the outer circumferential surface of the plain bearing, and
the oil supply passage is communicatively connected to the recessed portion.

4. A rotating-body support structure **characterized by** comprising:
a plain bearing that rotatably supports a rotating body; and
dynamic deformation means which is provided on an outer circumferential surface of the plain bearing and which dynamically deforms in an orthogonal direction to the axial direction of the rotating body when the rotating body vibrates.

5. A rotating-body support structure **characterized by** comprising:
a plain bearing that rotatably supports a rotating body ;
shrink means that shrinks the plain bearing in the radial direction of the plain bearing; and
control means that controls the shrink means when the rotating body vibrates.
